(19) **Europäisches Patentamt / European Patent Office / Office européen des brevets**

(11) **EP 2 308 259 B1**

(12) **FASCICULE DE BREVET EUROPEEN**

(45) Date de publication et mention de la délivrance du brevet:
**06.12.2017 Bulletin 2017/49**

(21) Numéro de dépôt: **09784463.3**

(22) Date de dépôt: **03.07.2009**

(51) Int Cl.:
**H04W 40/16** *(2009.01)*  **H04W 40/08** *(2009.01)*
**H04W 40/24** *(2009.01)*

(86) Numéro de dépôt international:
**PCT/FR2009/051303**

(87) Numéro de publication internationale:
**WO 2010/012926 (04.02.2010 Gazette 2010/05)**

(54) **ROUTAGE ADAPTABLE AUX CONDITIONS ELECTROMAGNETIQUES DANS UN RESEAU MULTI-SAUTS**

AN ELEKTROMAGNETISCHE BEDINGUNGEN IN EINEM MEHRSPRUNGNETZ ANPASSBARES ROUTING

ROUTING ADAPTABLE TO ELECTROMAGNETIC CONDITIONS IN A MULTIHOP NETWORK

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **29.07.2008 FR 0855204**

(43) Date de publication de la demande:
**13.04.2011 Bulletin 2011/15**

(73) Titulaire: **Orange**
**75015 Paris (FR)**

(72) Inventeurs:
• **REYNAUD, Laurent**
  **F-22660 Trevou-Treguignec (FR)**
• **GOURHANT, Yvon**
  **F-22300 Lannion (FR)**

(74) Mandataire: **Cabinet Plasseraud**
**66, rue de la Chaussée d'Antin**
**75440 Paris Cedex 09 (FR)**

(56) Documents cités:
| | |
|---|---|
| **WO-A-2004/077746** | **WO-A-2006/075942** |
| **GB-A- 2 445 455** | **US-A1- 2003 120 809** |
| **US-A1- 2005 026 617** | |

**Description**

L'invention se rapporte au domaine du routage dans un réseau multi-sauts, c'est-à-dire un réseau dont au moins certains des terminaux jouent un rôle de noeuds par lesquels des messages sont susceptibles de transiter.

Ainsi un message émis par un premier noeud, dit source, à destination d'un deuxième noeud, dit destination, distant du premier noeud peut transiter par un troisième noeud constitué d'un terminal du réseau. Un protocole de routage adapté au réseau est mis en oeuvre pour déterminer cet éventuel troisième noeud, ainsi que les éventuels autres noeuds par lesquels le message transite.

Parmi les réseaux multi-sauts, on peut citer les réseaux maillés, par exemple les réseaux maillés WiFi, et les réseaux Ad Hoc. Ces derniers peuvent mettre en oeuvre des communications sans fil et comporter des noeuds relativement mobiles.

Certains protocoles de routage, dits proactifs, prévoient que chaque noeud du réseau maintient à jour une table de routage et diffuse des données de contrôle, de façon à estimer la topologie du réseau. On peut par exemple citer OLSR (de l'anglais « Optimized Link State Routing ») et TBRPF (de l'anglais « Topology Broadcast based on Reverse-Path Forwarding »).

D'autres protocoles de routage, dits réactifs, prévoient une génération des chemins entre le noeud source et le noeud de destination seulement sur requête du noeud source. On peut citer AODV (de l'anglais «Ad hoc On-demand Distance Vector routing ») et DSR (de l'anglais « Dynamic Source Routing »).

Les documents WO2006/075942 et US 2003/120809 proposent un routage dans un réseau multi sauts visant à limiter les interférences entre signaux du réseau. Le document US2005/0026617 propose un procédé de « handover » pour des terminaux dans un réseau de communication sans fils.

Il est bien connu que la transmission de données numériques, qu'elle soit filaire ou sans fil, génère un champ électromagnétique. Lorsqu'une zone géographique est soumise à un champ électromagnétique relativement puissant, on peut craindre d'une part les effets sur les autres transmissions environnantes (interférences), et d'autre part les effets présumés sur la santé des personnes à proximité de cette zone.

Des recommandations, par exemple les recommandations du CIPRNI (Commission Internationale de la Protection contre le Rayonnement Non Ionisant) en association avec l'OMS, ou bien encore les décisions de l'ARCEP 5 (Autorité de

Régulation des Communications Electroniques et des Postes) en France, fixent des valeurs limites de puissance en émission. Ces valeurs limites dépendent entre autres de la zone d'utilisation (par exemple pour les décisions de l'ARCEP, France métropolitaine ou autre territoire français), du lieu de l'utilisation (intérieur ou extérieur de bâtiments) et de la bande de fréquence utilisée.

Il existe un besoin pour, lors de l'acheminement d'un message dans un réseau multi-sauts, limiter les zones pour lesquelles la puissance des champs électriques et/ou magnétiques est relativement élevée, ou tout du moins connaître ces zones.

La présente invention est définie par des revendications indépendantes, auxquelles il convient de se référer maintenant.

L'invention répond à ce besoin en proposant, selon un premier aspect, un procédé de routage dans un réseau multi-sauts, comprenant, pour au moins un noeud du réseau multi-sauts

a/ obtention d'une valeur de champ électromagnétique dans un voisinage de ce noeud,
b/ détermination d'un rapport entre ladite valeur obtenue et une valeur seuil de champ électromagnétique ($E_M$, $B_M$) prédéfinie,
c/ sélection ou non dudit noeud en tant que noeud d'acheminement d'au moins un message dans le réseau multi-saut en fonction du rapport déterminé.

Ainsi le routage est-il effectué en prenant en compte une valeur de champ électromagnétique (c'est-à-dire électrique et/ou magnétique) par comparaison avec une valeur de seuil de champ électromagnétique dans un voisinage d'un ou plusieurs noeuds. Il est ainsi possible de répartir les noeuds servant pour le transit des messages de façon à éviter ou minimiser le nombre des zones pour lesquelles la puissance des champs électriques et/ou magnétiques est relativement élevée et plus précisément dépasse la valeur de seuil.

Ce procédé permet donc d'effectuer un routage adaptable aux conditions de champs électriques et/ou magnétiques dans un voisinage des stations composant un réseau multi-sauts. L'invention peut trouver des applications diverses et variées, par exemple dans le domaine des réseaux domestiques sans fil, des réseaux médicaux hospitaliers et des réseaux de type 'health care' déployés en environnement médicalisé.

Le procédé selon un aspect de l'invention peut notamment permettre de mettre en place un routage de données sur des routes peu perturbées du réseau, ou sur des routes devant générer peu de perturbations électromagnétiques (par exemple, dans le cadre d'un réseau domestique, une route qui passerait près de la chambre d'un enfant), et ce de façon relativement simple.

Le procédé selon un aspect de l'invention peut permettre de mieux maîtriser la compatibilité électromagnétique (CEM) avec les équipements environnants. L'utilisation d'un terminal sans fil est en effet susceptible d'avoir une incidence au sens électromagnétique sur des appareils environnants, en particulier dans le contexte des réseaux médicaux hospitaliers, ou de type 'health care' déployés en environnement médicalisé.

Le procédé peut également permettre de limiter ou tout au moins de mieux maîtriser l'incidence électromagnétique sur les tissus vivants créée par le réseau sans fil lui-même ou créée par l'environnement global autour du réseau sans fil, en particulier pour les réseaux domestiques sans fil ou les réseaux de type 'health care'.

Le procédé de l'invention peut également permettre d'avoir une estimation globale et cumulative des perturbations électromagnétiques d'un environnement donné, dans un ensemble de bandes de fréquences données, que ces perturbations soient créées par les noeuds eux-mêmes ou par des dispositifs externes au réseau considéré.

Par le terme « message », on désigne ici un ensemble de données formant un bloc transmis dans un réseau. Selon le contexte, un message peut être qualifié de trame, de paquet de données, ou autre expression de ce type.

Le réseau multi-sauts peut en particulier être un réseau Ad Hoc ou un réseau maillé.

Le réseau multi-sauts peut être sans fil et/ou filaire. Par exemple les messages peuvent transiter par Ethernet ou par une technologie de courants porteurs en ligne (CPL). En particulier, les réseaux multi-sauts peuvent être hétérogènes, c'est-à-dire qu'au moins certains des noeuds sont susceptibles de comporter des interfaces de communication de différentes natures, par exemple Wifi et Ethernet, ou Ethernet et CPL, ou bien encore WiFi et Bluetooth (marque déposée).

Dans le cas d'un réseau hétérogène, le procédé proposé peut conduire à choisir, pour un noeud donné, l'une des interfaces disponibles.

Par voisinage d'un noeud, on entend généralement l'ensemble des voisins du noeud, c'est-à-dire l'ensemble des noeuds qui sont en portée directe de communication avec le noeud considéré. En d'autres termes, le voisinage d'un noeud comprend l'ensemble des noeuds qui n'ont pas besoin, pour accéder au noeud considéré, de passer par un ou plusieurs noeuds intermédiaires.

Cependant, par « valeur de champ électromagnétique dans le voisinage d'un noeud », au sens de l'étape a/, on entend aussi bien la valeur du champ au niveau du noeud lui-même que la valeur de ce champ dans une zone géographique à laquelle appartient le noeud, telle que la zone définie par la réunion des diverses zones de portée radio des interfaces de communication sans fil du noeud dont on considère le voisinage. On rappelle que la zone de portée radio est généralement définie par un disque dont le rayon est la portée maximale d'une interface de communication radio. On appelle aussi ce rayon le rayon de transmission.

Lors de l'étape c/, on utilise le rapport déterminé pour sélectionner ou non le noeud en tant que noeud d'acheminement de messages. Cette étape peut être par exemple menée conformément à un protocole de routage réactif: le noeud reçoit un message de requête, par exemple un message RREQ (de l'anglais « Route REQuest »), et y répond favorablement ou défavorablement selon la valeur obtenue à l'étape a/. Dans ce mode de réalisation, les étapes a/ b/ et c/ sont ainsi mises en oeuvre par un même noeuds.

L'invention n'est bien entendu pas limitée par le mode de routage mis en oeuvre. Par exemple, on peut prévoir que l'étape c/ soit menée conformément à un protocole de routage pro-actif : un noeud donné transmet le rapport déterminé à l'étape b/ à des noeuds voisins à des fins d'une mise à jour de tables de routage, et ces noeuds voisins décident ou non d'envoyer des messages à ce noeud donné à des fins de transit vers d'autres noeuds selon la valeur transmise de champ électrique et/ou magnétique dans le voisinage de ce noeud donné. Dans ce mode de réalisation, les étapes a/, b/ et c/ sont alors mises en oeuvre par plusieurs noeuds du réseau multi-sauts.

Le champ magnétique et/ou électrique dont on obtient la valeur à l'étape a/ peut résulter uniquement de la transmission de messages dans le réseau multi-sauts. C'est-à-dire que la détermination de la valeur de ce champ prend en compte uniquement les effets de la transmission de messages dans le réseau multi-sauts.

Alternativement, le champ dont on obtient la valeur à l'étape a/ peut résulter de la transmission de messages dans le réseau multi-sauts et d'autres facteurs, notamment liés à l'environnement du noeud, comme par exemple la transmission d'autres données sur d'autres réseaux, le fonctionnement d'un appareil ménager (de type fer à repasser ou four à micro-ondes) à proximité du noeud, ou autre. L'invention n'est pas limitée par la nature de la valeur obtenue à l'étape a/, pourvu que celle-ci se rapporte à un champ électromagnétique. Par exemple, cette valeur peut comprendre une puissance électromagnétique par exemple en Watts, une densité de puissance en Watts par mètre carré, une densité de flux magnétique par exemple en Teslas ou bien encore en Ampères par mètre (densité de flux H) et/ou une intensité de champ électrique par exemple en Volts par mètre, ou autre.

La valeur obtenue à l'étape a/ peut être relative à certaines fréquences seulement. Par exemple, on mesure une puissance de champ électromagnétique dans une bande de fréquences donnée, par exemple 2,4 GHz - 5 GHz.

Alternativement, la valeur obtenue à l'étape a/ peut tenir compte de toutes les composantes fréquentielles du spectre, c'est-à-dire en particulier cette valeur peut tenir compte des fréquences autres que les fréquences de fonctionnement des interfaces de communication, par exemple des composantes continues du champ électrique et/ou magnétique, des composantes à 50-60 Hz, et autres composantes.

Ainsi, le procédé selon un aspect de l'invention peut permettre de choisir des routes évitant des zones particulièrement perturbées d'un point de vue électromagnétique.

L'étape a/ d'obtention peut être effectuée à partir d'une mesure de valeur de champ électrique et/ou magnétique, de sorte que la valeur obtenue peut être relativement précise.

L'invention n'est pas limitée par le type de capteur mis en jeu pour effectuer cette mesure.

Cette mesure peut être effectuée au voisinage du noeud, au moyen par exemple d'un capteur intégré dans le boitier du noeud, ce qui permet une mesure particulièrement fiable. Le capteur peut éventuellement être distinct du noeud, en étant relié au noeud par une liaison filaire par exemple, pourvu que ce capteur permette de mesurer une valeur de champ électrique et/ou magnétique dans le voisinage du noeud.

Alternativement, cette mesure peut être effectuée par un ou plusieurs capteurs distants, appartenant par exemple à un réseau de capteurs distinct du réseau multi-sauts.

Le procédé selon un mode de réalisation de l'invention peut comprendre, pour au moins un capteur distant, une étape de réception d'une mesure de champ électrique et/ou magnétique dans le voisinage de ce capteur, la mesure reçue provenant de ce capteur. La valeur du champ électrique et/ou magnétique dans le voisinage du noeud est évaluée à partir de cette ou ces mesure(s) reçue(s).

On évite ainsi d'équiper chaque noeud d'un capteur. On peut en particulier utiliser un réseau de capteurs du type des réseaux de capteurs utilisés pour mesurer la température ou la qualité de l'air. La mise en place de ces réseaux peut être relativement simple et bon marché.

En outre, en cas de défaillance d'un capteur, il peut rester possible d'estimer les valeurs de champ dans le voisinage des noeud, en utilisant les mesures obtenues des autres capteurs.

Chaque mesure de champ au voisinage d'un capteur peut être reçue directement de ce capteur, de sorte que le noeud ne reçoit des mesures que de capteurs communiquant directement avec le noeud sans passer par un autre noeud (on parle alors de capteurs situés à un saut du noeud). On peut donc présumer de la pertinence des mesures reçues pour estimer la valeur de champ au voisinage du noeud.

Alternativement, une mesure de champ au voisinage d'un capteur peut être reçue indirectement de ce capteur, en transitant par exemple via un autre capteur ou via un autre noeud.

Le noeud peut recevoir, outre les valeurs mesurées, des informations de localisation des capteurs correspondant, par exemple une position absolue ou relative à la position du noeuds. Ces informations de localisation peuvent être prises en compte lors des calculs d'évaluation du champ électrique et/ou magnétique au voisinage du noeud. En outre, ces informations de localisation peuvent permettre d'éliminer les valeurs mesurées provenant de capteurs estimés trop lointains du noeuds.

On peut en effet prévoir de recevoir une pluralité de mesures de champ électrique et/ou magnétique dans le voisinage d'une pluralité de capteurs respectifs, et de sélectionner parmi cette pluralité de mesures reçue des mesures jugées pertinentes, par exemple des mesures correspondant à des capteurs relativement proches du noeuds. La valeur de champ électrique et/ou magnétique dans le voisinage du noeud est évaluée à partir des mesures sélectionnées.

Par exemple, cette sélection peut être effectuée par le noeud, en utilisant des critères du type distance entre noeud et capteur (à comparer par exemple à une valeur maximale prédéterminée), nombre de sauts entre noeud et capteur, présence de mesures dans la bande de fréquence, ou autre.

On peut prévoir que les mesures soient reçues d'un dispositif de passerelle assurant l'interconnexion entre le réseau multi-sauts des noeuds et le réseau de capteurs, éventuellement suite à une requête provenant du noeuds.

La passerelle peut diffuser vers tous les noeuds d'un ensemble de noeuds les mesures reçues de tous les capteurs d'un ensemble de capteurs. On parle alors d'inondation. Chaque noeud choisit parmi les mesures reçues celles qu'il juge pertinentes pour l'évaluation du champ au voisinage du noeud. Ce choix peut être effectué en utilisant par exemple un critère de distance ; dans ce cas, le noeud reçoit avec chaque mesure une information de localisation du capteur correspondant à cette mesure.

Alternativement, la passerelle peut choisir de transmettre à un noeud donné seulement les mesures jugées pertinentes pour l'évaluation du champ au voisinage de ce noeud. C'est alors la passerelle qui sélectionne parmi une pluralité de mesures les mesures jugées pertinentes pour l'estimation d'une valeur de champ au voisinage du noeud. On peut prévoir que le noeud transmette à la passerelle une information relative à sa propre localisation, sur laquelle la passerelle se base pour sélectionner les mesures.

Selon encore un autre mode de réalisation, l'étape a/ d'obtention peut être effectuée à partir d'une prédiction de valeur de champ électromagnétique. Cette prédiction peut être effectuée à partir d'au moins un paramètre contextuel, par exemple des connaissances de pré-ingénierie. Un serveur d'aide au bien vivre comportant un logiciel expert peut par exemple être mis en oeuvre. Un tel serveur est agencé pour prédire, à partir de paramètres contextuels, une valeur de champ électromagnétique à un endroit donné. Les paramètres contextuels peuvent comprendre des données contextuelles attendues, par exemple des informations de trafic attendu en fonction du temps ou des informations d'utilisation attendue d'appareils ménagers. Les paramètres contextuels peuvent comprendre des données contextuelles mesurées, par exemple des informations de mesure de nombre d'appareils ménagers en cours d'utilisation. Ce mode de réalisation peut être mis en oeuvre sans capteurs de champ électromagnétique.

Selon encore un autre mode de réalisation, on estime une valeur de métrique à partir de la valeur de champ électromagnétique obtenue à l'étape a/, d'une valeur de champ électromagnétique précédemment obtenue, et de la valeur seuil de champ électromagnétique prédéfinie, et lors de l'étape c/, on utilise ladite valeur de métrique pour sélectionner ou non ledit noeud en tant que noeud d'acheminement d'au moins un message dans le réseau multi-saut.

Selon encore un autre mode de réalisation, la valeur de métrique est estimée de la façon suivante :

$$c_t = \frac{1}{\alpha \cdot M_t + (1-\alpha) \cdot M_{t-1}},$$

avec $c_t$ la valeur de métrique,

$$0 < \alpha \leq 1,$$

$$M_t = \max\left(\frac{E_t}{E_M}, \frac{B_t}{B_M}\right), \text{ et } M_{t-1} = \max\left(\frac{E_{t-1}}{E_M}, \frac{B_{t-1}}{B_M}\right)$$

où $E_M$ et $B_M$ sont des valeurs prédéterminées,
$E_t$ est une valeur de champ électrique obtenue à l'étape a/ ,
et $E_{t-1}$ est une valeur de champ électrique précédemment obtenue,
$B_t$ est une valeur de champ magnétique obtenue à l'étape a/, et
et $B_{t-1}$ est une valeur de champ magnétique précédemment obtenue.

Selon encore un autre mode de réalisation, pour chaque route candidate d'un jeu d'au moins une route candidate, on détermine un paramètre de route à partir des valeurs de métrique des noeuds de ladite route candidate, et on compare les paramètres de route ainsi déterminés pour choisir une route parmi les routes candidate, Selon l'invention, pour chaque route candidate, le paramètre de route est déterminé en utilisant une loi de composition des valeurs de métrique concave.

Selon un autre aspect, il est proposé un programme d'ordinateur comportant des instructions pour la mise en oeuvre du procédé de routage exposé ci-dessus, lorsque ces instructions sont exécutées par un processeur.

Selon un autre aspect, il est proposé un support d'enregistrement lisible par un ordinateur sur lequel est enregistré un programme d'ordinateur tel qu'exposé ci-dessus.

Selon un autre aspect, il est proposé un système de routage dans un réseau multi-sauts, comportant, pour au moins un noeud du réseau, des moyens d'obtention d'une valeur de champ électromagnétique dans un voisinage de ce noeud, des moyens de détermination d'un rapport entre ladite valeur obtenue et une valeur seuil de champ électromagnétique prédéfinie, ainsi que des moyens de choix de route agencés pour utiliser le rapport déterminé pour sélectionner ou non le noeud en tant que noeud d'acheminement d'au moins un message dans le réseau multi-sauts.

Ce système peut comprendre plusieurs dispositifs, par exemple plusieurs noeuds du réseau. On peut par exemple prévoir que les moyens d'obtention d'une valeur de champ électromagnétique comportent des capteurs pour effectuer des mesures de champ électriques et/ou magnétiques, ainsi éventuellement qu'un dispositif de passerelle pour communiquer avec les noeuds. On peut aussi prévoir que les moyens d'obtention comportent des moyens de communication avec des capteurs ou avec un dispositif de passerelle. On peut encore prévoir que les moyens d'obtention comportent un dispositif de prédiction de valeurs de champ électrique et/ou magnétique, par exemple un serveur d'aide au bien-vivre, et/ou des moyens de communication avec un tel dispositif.

Selon encore un autre aspect, il est proposé un noeud pour un réseau multi-sauts, ce noeud comportant des moyens d'obtention d'une valeur de champ électromagnétique dans un voisinage de ce noeud, des moyens de détermination d'un rapport entre ladite valeur obtenue et une valeur seuil de champ électromagnétique prédéfinie et des moyens de choix de route agencés pour utiliser le rapport déterminé par les moyens d'obtention pour s'auto-sélectionner ou non en tant que noeud d'acheminement d'au moins un message dans le réseau multi-sauts.

Selon encore un autre aspect, il est proposé un terminal de communication formant noeud d'un réseau multi-sauts tel que décrit précédemment.

D'autres particularités et avantages de la présente invention apparaîtront dans la description détaillée ci-après, faite en référence aux dessins annexés sur lesquels :

- La figure 1 montre un exemple d'une partie d'un réseau multi-sauts comprenant un système de routage selon un premier mode de réalisation de l'invention,
- La figure 2 montre un exemple de système de routage selon le premier mode de réalisation de l'invention,
- La figure 3 est un organigramme d'un exemple de procédé exécutable par un programme d'ordinateur selon un mode de réalisation de l'invention,
- Les figures 4A à 4E illustrent un exemple de choix d'une route dans le réseau multi-sauts de la figure 2,
- La figure 5 montre un exemple d'une partie d'un réseau multi-sauts comprenant un système de routage selon un deuxième mode de réalisation de l'invention,
- La figure 6 montre un exemple de système de routage selon le deuxième mode de réalisation de l'invention,
- La figure 7 montre un exemple d'une partie d'un réseau multi-sauts comprenant un système de routage selon un troisième mode de réalisation de l'invention,
- La figure 8 montre un exemple de système de routage selon le troisième mode de réalisation de l'invention,
- La figure 9 montre un exemple d'une partie d'un réseau multi-sauts comprenant un système de routage selon un quatrième mode de réalisation de l'invention,
- La figure 10 montre un exemple de système de routage selon le quatrième mode de réalisation de l'invention.

Des références identiques désignent des objets identiques ou similaires d'une figure à l'autre.

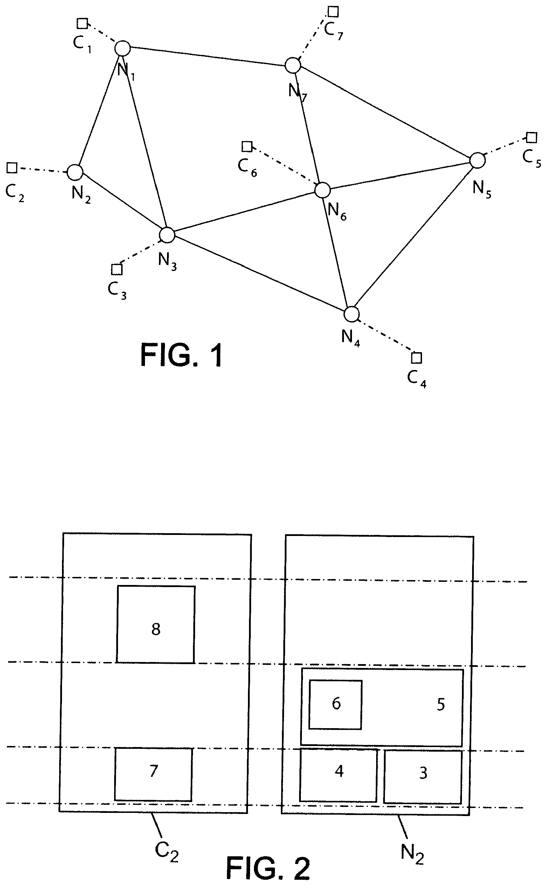

Les figures 1 et 2 se rapportent à un premier mode de réalisation de l'invention, dans lequel des mesures de valeurs de champs électrique et/ou magnétique sont effectuées directement au voisinage des noeud du réseau. Lors du choix d'une route, on utilise ces valeurs mesurées pour sélectionner ou non un noeud en tant que noeud d'acheminement de messages dans le réseau multi-sauts.

On se réfère tout d'abord à la figure 1, sur laquelle on a représenté un exemple d'une partie d'un réseau multi-sauts comprenant un système de routage selon un premier mode de réalisation de l'invention.

Chaque terminal ou noeud $N_1$, $N_2$, ..., $N_7$, de la partie du réseau représentée est relié, par un lien de communication filaire ou sans fil, à un capteur respectif $C_1$, $C_2$, ...,$C_7$. Un tel capteur électromagnétique peut être directement intégré au noeud, ou situé à proximité de ce noeuds.

Les communications entre les différents noeuds $N_1$, $N_2$, ...,$N_7$, s'effectuent par des liens de communication filaires ou sans fil. Le réseau multi-sauts peut être par exemple un réseau maillé sans fil multi-sauts ou un réseau ad hoc sans fil multi-sauts. Il peut s'agir d'un réseau hétérogène, dans lequel par exemple certains noeuds sont reliés par des liaisons filaires, et d'autres par des liaisons sans fil.

La figure 2 montre de façon fonctionnelle un exemple de système de routage selon le premier mode de réalisation de l'invention. Les différents composants 3, 4, 5, 6, 7 et 8 sont positionnés selon leur fonction : ainsi les composants 3, 4, 7 assurent des fonctions d'interfaçage, les composants 5, 6 des fonctions de routage, et le composant 8 une fonction applicative.

Le noeud $N_2$ est un terminal de communication comprenant une interface de communication 3 avec les autres noeuds du réseau. Cette interface peut être sans fil ou filaire, par exemple Ethernet 802.3. Parmi les exemples de technologie sans fil utilisables, on peut citer par exemple 802.11a/b/g/n, Bluetooth (marque déposée), UWB (de l'anglais « UltraWideBand »).

La partie de réseau composée de l'ensemble des noeuds $N_1$, $N_2$, ..., $N_7$ peut s'appuyer sur un seul type d'interface de communication, comme le noeud $N_2$ de la figure 2, ou sur plusieurs types d'interfaces de communication. Dans ce dernier cas, on qualifiera le réseau de réseau multi-sauts hétérogène.

Le noeud $N_2$ comporte en outre des moyens de choix de route 5, ici un composant de routage multi-sauts apte à router des paquets de contrôle et de données sur l'interface de communication 3 du noeud $N_2$.

Le composant de routage 5 peut mettre en oeuvre un protocole de routage Ad Hoc proactif, du type OLSR, TBRPF ou autre, un protocole Ad Hoc réactif, du type AODV DSR, ou autre. Le composant 5 peut alternativement mettre en oeuvre un protocole de routage Ad Hoc hybride, adoptant une approche proactive ou réactive selon le contexte. Par exemple un protocole ZRP (de l'anglais « Zone Routing protocol ») en anglais) peut être mis en oeuvre. Alternativement, le composant de routage 5 peut mettre en oeuvre un protocole dit « non-plat » ou hiérarchique, ou autre.

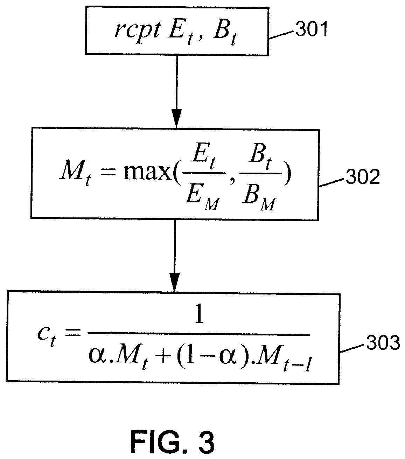

Le composant 5 comprend des moyens d'estimation 6 d'une métrique de champ électrique et/ou magnétique. L'estimation de cette métrique est décrite en référence à la figure 3, détaillée plus loin.

Le composant 5 est apte à choisir une route en fonction de la métrique de champ électrique et/ou magnétique estimée.

En particulier, il existe des protocoles de routage visant le support de la qualité de service ou QoS (de l'anglais « Quality of Service »), par exemple INSIGNIA ou BRuIT (de l'anglais « Bandwidth Reservation under Interference influence »). On peut également citer des travaux de prise en compte des interférences pour améliorer la qualité de service pour des protocoles pro-actifs, en particulier l'article de D.Q. Nguyen et P. Minet, 'Interference-aware QoS for mobile ad-hoc network routing', ACIS-IEEE int. Workshop on Self-Assembling Wireless Networks, SAWN'05, Towson, Maryland, Mai 2005, pour le cas d'un protocole OLSR.

Ces protocoles permettent de prendre en compte des métriques de délai ou de bande passante dans le choix d'une route. Le composant 5 peut être agencé suivant un tel protocole de routage visant le support de la qualité de service, à ceci prés que la métrique manipulée est la métrique de champ électrique et/ou magnétique estimée par les moyens 6.

Le capteur $C_2$ est rattaché au noeud $N_2$ au moyen d'une liaison filaire ou sans fil. Le capteur $C_2$ et le noeud $N_2$ comportent des dispositifs d'interfaçage 7, 4 respectivement pour assurer une communication entre le capteur $C_2$ et le noeud $N_2$. On peut aussi prévoir un capteur directement intégré dans le noeuds.

Le capteur $C_2$ comprend un dispositif 8 de mesure de champ électrique et/ou magnétique, par exemple un capteur de champ électromagnétique mono-axial simple, ou bien encore un capteur de champ triaxial permettant de réaliser des mesures sans intervention d'un opérateur.

Les conditions de champ électromagnétique définies par le couple ($E$, $B$) représentant à un instant t les intensités de champ électrique $\vec{\mathbf{E}}$ et le champ magnétique $\vec{\mathbf{B}}$ sont mesurées par le composant 8 sur une ou plusieurs bandes de fréquences données et prédéfinies.

La figure 3 est un organigramme représentant un exemple de procédé exécutable par les moyens d'estimation 6.

Le capteur 8 effectue des mesures à intervalles réguliers du champ électrique et du champ magnétique dans une bande de fréquences donnée.

Lors d'une étape 301, les moyens d'estimation 6, par exemple un processeur ou une partie de processeur, reçoivent une valeur $E_t$ de champ électrique dans la bande de fréquences donnée et une valeur $B_t$ de champ magnétique dans la bande de fréquences donnée.

Est déterminée lors d'une étape 302 une valeur $M_t$ de la façon suivante :

$$M_t = \max\left( \frac{E_t}{E_M}, \frac{B_t}{B_M} \right),$$

où $E_M$ et $B_M$ sont des valeurs de seuil sur la bande de fréquences considérée du champ électrique et du champ magnétique respectivement, typiquement des valeurs maximales tolérées par une norme donnée. Cette norme peut être par exemple donnée par le décret n° 2002-775, c'est-à-dire $E_M = 61$ V/m et $B_M = 0,2$ $\mu$T, dans la bande de fréquences 2,4 GHz-5 GHz. Ainsi la valeur $M_t$ représente un rapport entre une valeur du champ électromagnétique et une valeur de seuil de champ électromagnétique.

Une métrique $c_t$ est alors estimée lors d'une étape 303, en utilisant une valeur $M_{t-1}$ précédemment estimée à partir des valeurs $E_{t-1}$ et $B_{t-1}$ reçues au temps indicé t-1, et conservée en mémoire :

$$c_t = \frac{1}{\alpha \cdot M_t + (1-\alpha) \cdot M_{t-1}}, \text{ avec } 0 < \alpha \le 1.$$

Si le capteur utilisé ne permet que de mesurer l'intensité du champ électrique $\vec{\mathbf{E}}$ (respectivement la densité de flux magnétique $\vec{\mathbf{B}}$), $B_t$ (respectivement $E_t$ ) est supposé nul à tout instant t. Dans ces deux cas, les équations des étapes 302 et 303 restent valables.

La métrique $c_t$, propre au noeud $N_2$, est réactualisée après chaque mesure du capteur 8. Il s'agit d'une valeur strictement positive et non normalisée.

Si $c_t \le 1$, alors les conditions de champ électromagnétiques autour du capteur 8 sont au-delà des niveaux limites autorisés et/ou recommandés par la norme donnée.

Si $c_t > 1$, alors les conditions de champ électromagnétiques autour du capteur 8 respectent les niveaux limites autorisés et/ou recommandés par la norme donnée. Si $c_t$ est grand devant 1, peu d'effets de champ électromagnétique autour du capteur sont à prévoir dans la bande de fréquences considérée.

Le noeud $N_2$ peut diffuser la valeur de $c_t$ à d'autres noeuds du réseau. Le choix des routes peut être effectué en se basant sur les valeurs de métrique $c_t$ de plusieurs noeuds du réseau. Par exemple, pour chaque route candidate, on détermine un paramètre de route à partir des valeurs de métrique $c_t$ pour les noeuds de cette route candidate. Par exemple on multiplie ou on additionne les valeurs des métriques $c_t$ des noeuds de cette route, et on choisit la route candidate pour laquelle le produit ou la somme résultant est le (la) plus élevé(e).

En particulier, les algorithmes de sélection de chemins standards, comme Dijkstra, Bellman-Ford, et leurs variantes, restent utilisables.

Avantageusement, plutôt qu'une somme ou un produit, on choisira d'utiliser une loi de composition des valeurs de métriques $c_t$ concave pour déterminer les paramètres de route. En effet, il est pertinent de choisir une route pour laquelle aucun noeud ne présente une métrique $c_t$ de valeur inférieure à un seuil. Le seuil peut être égal à 1, ce qui correspond aux limites des valeurs autorisées ou recommandées de champs électrique et/ou magnétique. Le seuil peut être strictement supérieur à 1.

La diffusion dans le réseau multi-sauts des valeurs de métriques $c_t$ et la prise en compte de ces valeurs de métriques pour le choix d'une route peuvent se conformer à des règles définies dans un protocole de routage visant le support de la qualité de service, à ceci prés que la métrique manipulée est la métrique de champ électrique et/ou magnétique $c_t$.

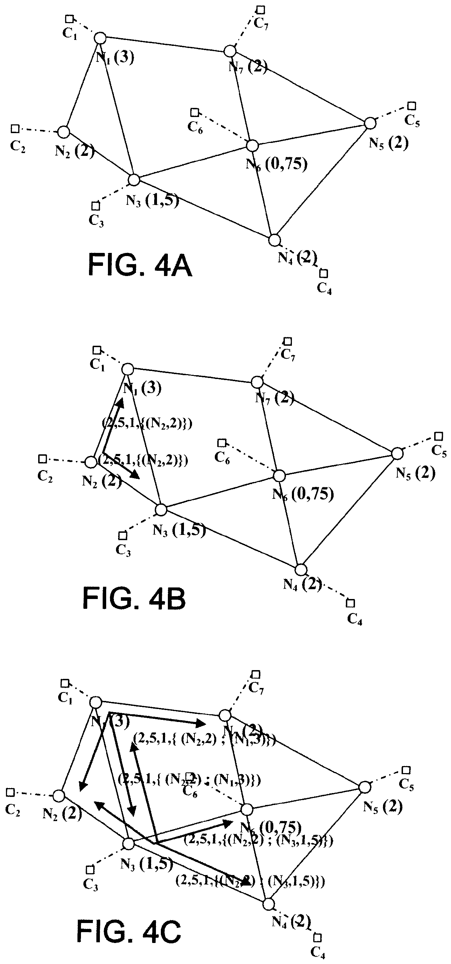

Les figures 4A à 4E illustrent un exemple de choix d'une route dans le réseau multi-sauts de la figure 2. Dans cet exemple, on se conforme à un protocole de routage Ad Hoc réactif DSR avec prise en compte de la qualité de service, à ceci près que la métrique manipulée est la métrique $c_t$, et non une métrique de qualité de service habituellement utilisée, comme par exemple une métrique de délai ou de bande passante.

A moins qu'il n'en soit spécifié autrement dans la présente description des figures 4A à 4E, le protocole décrit est conforme au RFC expérimental 4728, 'The Dynamic Source Routing protocol (DSR) for Mobile Ad Hoc Networks for IPv4'. A ce fonctionnement par défaut, est ajoutée la possibilité pour chaque noeud de maintenir localement la valeur de métrique $c_t$, et de tenir compte de cette valeur lors du relais de tout paquet de contrôle.

Chaque noeud conserve la valeur de métrique $c_t$, dite également CCEM (comme « Conditions de Champ ElectroMagnétique »), comme représenté sur la figure 4A. Par exemple au noeud $N_6$ correspond une valeur de métrique $c_t$ = 0,75, c'est-à-dire que le champ électrique et/ou magnétique est relativement important dans le voisinage de ce noeud $N_6$.

Dans l'exemple représenté, le noeud $N_2$ souhaite déterminer une route vers le noeud $N_5$. Le noeud $N_2$ diffuse un message de contrôle de type RouteRequest indiquant une demande de découverte de route vers le noeud $N_5$. Le paquet RouteRequest contient une structure de type {S, D, CCEM$_{min}$, L} contenant la référence des noeuds source (S) et destination (D), la valeur minimale de métrique CCEM acceptée pour chaque noeud de la route à construire, ainsi qu'une liste L des noeuds qu'a traversé le paquet.

La liste L contient en outre les valeurs CCEM associées à chacun des noeuds de cette liste au moment où le message RouteRequest a traversé ces noeuds. Dans l'exemple illustré par la figure 4B, le noeud $N_2$ envoie un message de RouteRequest contenant la structure $(2,5,1,\{(N_2,2)\})$, indiquant que le message provient du noeud $N_2$, est à destination du noeud $N_5$, impose une valeur minimale de métrique CCEM $c_t$=1 pour chaque noeud de la route à construire, et a traversé le noeud $N_2$ qui avait comme valeur de CCEM $c_t(N_2, t) = 2$ au moment t de la traversée de ce noeud.

Le message RouteRequest est reçu par les noeuds $N_1$ et $N_3$ à portée de l'émission de ce message. Le noeud $N_1$ analyse le message RouteRequest et vérifie son aptitude à relayer ce message en suivant les règles par défaut de la spécification DSR. De plus, le noeud $N_1$ vérifie que la valeur de CCEM mesurée dans le voisinage du noeud $N_1$ sensiblement au moment où le message RouteRequest traverse ce noeud $N_1$ est supérieure à la valeur de CCEM minimale imposée dans le message RouteRequest lui-même. En l'occurrence, pour le noeud $N_1$, $c_t$ = 3, ce qui est bien supérieur au seuil CCEM$_{min}$ = 1. $N_1$ propage donc le message RouteRequest, en se rajoutant dans la liste des noeuds traversés. Dit autrement, le noeud $N_1$ diffuse le message de RouteRequest contenant une structure de type $(2,5,1, \{(N_2,2) ; (N_1,3)\})$, comme représenté sur la figure 4C.

De la même façon, le noeud $N_3$ diffuse le message de RouteRequest, contenant cette fois-ci une structure de type $(2,5,1, \{(N_2,2) ; (N_3, 1,5)\})$.

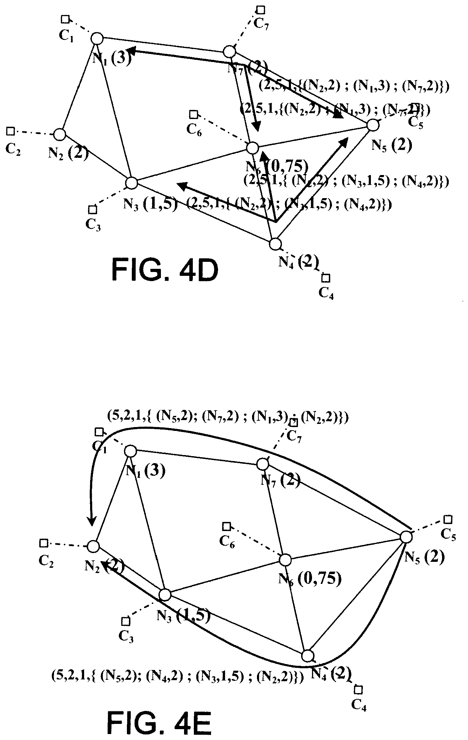

Le noeud $N_6$ reçoit un message RouteRequest provenant de $N_3$. $N_6$, en accord avec les règles par défaut du protocole DSR, devrait diffuser ce message. Cependant, la valeur de métrique $c_t$ correspondant à ce noeud est de 0,75, c'est-à-dire une valeur inférieure au seuil minimal de 1. Le noeud $N_6$ s'abstient donc de diffuser ce message RouteRequest, comme illustré sur la figure 4D.

Le noeud $N_7$ reçoit un message RouteRequest provenant de $N_1$, qui satisfait les règles par défaut du protocole DSR. La valeur de métrique $c_t$ correspondant à ce noeud $N_7$ est de 2, c'est-à-dire une valeur supérieure au seuil minimal de 1. Le noeud $N_7$ diffuse donc un message RouteRequest contenant la structure $(2,5,1, \{(N_2,2) ; (N_1,3) ; (N_7,2)\})$.

De la même manière, le noeud $N_4$ reçoit un message RouteRequest provenant de $N_3$, et diffuse donc un message de RouteRequest contenant la structure $(2,5,1, \{(N_2,2) ; (N_3,1,5) ; (N_4,2)\})$.

Le noeud de destination $N_5$ reçoit les deux messages de type RouteRequest provenant respectivement de $N_7$ et $N_4$. Ces deux messages sont tous les deux valides au sens des règles de base de DSR.

Le noeud $N_5$ choisit le chemin le plus court en nombre de noeuds. En cas d'une pluralité de plus courts chemins, le meilleur chemin peut être déterminé en recherchant pour chaque plus court chemin la plus faible valeur de métrique $c_t$ parmi les noeuds de ce chemin, et en choisissant le chemin pour lequel cette valeur est la plus élevée. Pour reprendre l'exemple de la figure 4E, ce serait le chemin passant par les noeuds $N_1$ et $N_7$ qui serait choisi.

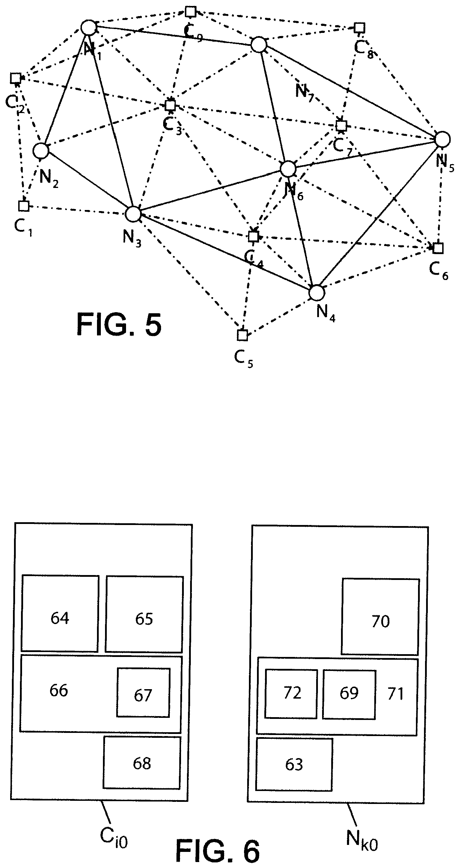

Les figures 5 et 6 se rapportent à un deuxième mode de réalisation de l'invention, dans lequel un exemple de réseau de capteurs $C_1,..., C_9$ est mis en oeuvre.

De tels réseaux de capteurs sont connus, à des fins par exemple de mesure de la température ou de la qualité de l'air.

Dans un tel mode de réalisation, noeuds et capteurs font par exemple partie du même réseau multi-sauts mais ne sont plus directement reliés.

Un capteur $C_{i0}$ et un noeud $N_{k0}$ sont représentés à la figure 6. La distance entre ce capteur $C_{i0}$ et ce noeud $N_{k0}$ n'est pas connue a priori, et pourrait être estimée directement par exemple par une technique d'identification par radiofréquence (RFID). Toutefois, dans ce deuxième mode de réalisation, les noeuds $N_{k0}$ et les capteurs $C_{i0}$ disposent tous de moyens de localisation 70, 65 aptes à déterminer leur propre position.

Le capteur $C_{i0}$ comprend un dispositif 64 de mesure de champ électrique et/ou magnétique, relié au composant de routage 66. Le composant 66 comporte un composant 67 agencé pour mettre en forme les messages de contrôle suivant la structure

$$\text{structure } S_i = \{ID_i, \ Loc_i, \ Val_i\},$$

avec $ID_i$, un identifiant du capteur $C_i$, i indiçant les capteurs,
$Loc_i$, les coordonnées du capteur $C_i$ reçues des moyens 65, et

$Val_i$, une structure contenant une série de $q_i$ mesures de couples (E, B) pour l'ensemble des $q_i$ bandes de fréquences observées par les moyens 64 du capteur $C_i$ :

$$Val_i = \{(BF_{i,1}, \ E_{i,1}, \ B_{i,1}), (BF_{i,2}, \ E_{i,2}, \ B_{i,2}), \dots , (BF_{i,qi}, \ E_{i,qi}, \ B_{i,qi})\},$$

ces $q_i$ bandes de fréquences observées par le capteur $C_i$ étant indicées par q variant de 1 à $q_i$,

Le capteur $C_{i0}$ intègre en outre une interface de communication 68 avec les noeuds. Le capteur $C_{i0}$ peut diffuser périodiquement, dans son voisinage à un saut, les mesures de champ $E$ et $B$, selon par exemple le protocole de routage multi-sauts, de sorte que ces mesures sont comprises dans le message de contrôle vers les noeuds avoisinants à un saut. Alternativement, les mesures peuvent être envoyées dans un autre type de message de contrôle supporté par le protocole de routage du réseau multi-sauts, ou bien encore dans une extension d'un message de contrôle standard, par exemple un message de type HELLO.

Le noeud $N_{k0}$ ou N comporte une interface de communication 63 pour communiquer avec les autres noeuds et les capteurs.

Dans ce deuxième mode de réalisation, le noeud $N_{k0}$ comporte des moyens d'évaluation 69 du champ dans le voisinage du noeud $N_{k0}$. Ces moyens 69 sont reliés aux moyens de localisation 70 et à l'interface 63 de façon à recevoir en entrée :

- Les coordonnées $Loc_N$ du noeud $N_{k0}$,
- La liste des $r$ bandes de fréquences $(BF_{N,1}, BF_{N,2}, \dots , BF_{N,r})$ considérées par le noeud $N_{k0}$, ces r bandes de fréquences étant indicées par j variant de 1 à r,
- Pour chaque capteur $C_i$ voisin à un saut du noeud $N_{k0}$, une structure $S_i$ contenant les coordonnées $Loc_i$ du capteur, et $Val_i$, l'ensemble des couples $(E_{i,q}, B_{i,q})$ mesurés dans les $q_i$ différentes bandes de fréquences observées par le capteur $C_i$.

Les moyens 69 permettent d'évaluer une valeur de champ dans le voisinage du noeud $N_{k0}$, et ce pour chacune des bandes de fréquences observées pour le noeud $N_{k0}$. Les moyens 69 appliquent des critères détaillés ci-dessous pour sélectionner les mesures utilisées lors de l'évaluation de la valeur de champ dans le voisinage du noeud $N_{k0}$

Si le noeud $N_{k0}$ ne possède aucun capteur avoisinant à un saut et ayant renvoyé préalablement au noeud $N_{k0}$ une structure $S_i$ valide, ou bien encore si la bande de fréquence $BF_{N,j}$ n'est pas incluse dans au moins une des bandes de fréquence observées par les capteurs $C_i$ avoisinants à un saut du noeud $N_{k0}$ et ayant renvoyé une structure $S_i$ valide, alors le noeud $N_{k0}$ attribue pour cette bande de fréquence $BF_{N,i}$ une valeur de métrique CCEM par défaut

$$ccem \ (N, BF_{N,i}) = CCEM\_DEFAUT(BF_{N,i}).$$

Cette valeur par défaut peut être fixée par exemple à 1. Ainsi, en l'absence d'informations relatives aux champs électromagnétiques au niveau du noeud $N_{k0}$ pour la bande de fréquences $BF_{N,j}$, on attribue la valeur de métrique CCEM la plus défavorable, mais dans la limite des valeurs autorisées. Le noeud $N_{k0}$, bien que pénalisé par cette valeur de métrique CCEM par défaut, reste sélectionnable ultérieurement comme noeud de transit.

On peut choisir d'attribuer à *CCEM_DEFAUT*($BF_{N,j}$) une valeur strictement inférieure à 1. Le noeud n'est alors pas sélectionné ultérieurement comme noeud intermédiaire d'un chemin pour router des paquets de données.

Enfin, on peut également choisir d'attribuer à *CCEM_DEFAUT*($BF_{N,j}$) une valeur strictement supérieure à 1 ; le noeud $N_{k0}$ peut alors être ultérieurement choisi de manière prioritaire comme noeud de transit, par rapport à un noeud dont les conditions électromagnétiques aboutiraient à une métrique CCEM réellement évaluée de 1.

Si le noeud $N_{k0}$ possède au moins un capteur avoisinant à un saut lui ayant renvoyé préalablement une structure $S_i$ valide et si la bande de fréquence $BF_{N,j}$ est incluse dans au moins une des bandes de fréquence observées par les capteurs $C_i$ avoisinants à un saut du noeud $N_{k0}$ et ayant renvoyé une structure $S_i$ valide, alors on considère l'ensemble des triplets ($BF_{i,q}$, $E_{i,q}$, $B_{i,q}$) représentant, pour l'ensemble G des capteurs $C_i$ voisins à un saut du noeud $N_{k0}$, les conditions ($E_{i,q}$, $B_{i,q}$) relevées par le capteur Ci dans la bande de fréquence $BF_{i,q}$, celle-ci devant vérifier $BF_{N,j} \subset BF_{i,q}$.

On considère également le couple ($ID_i$, $Loc_i$) permettant au noeud de localiser le capteur $C_i$ et d'en déduire, à partir de ses propres coordonnées $Loc_N$, la distance $d_i$ séparant ce noeud $N_{k0}$ du capteur $C_i$.

Si, pour tous les capteurs de l'ensemble G, cette distance $d_i$ est supérieure à un seuil déterminé $d_0$, alors on considère qu'il n'existe pas de capteur $C_i$ voisin à un saut du noeud $N_{k0}$ suffisamment près de ce dernier pour prendre en compte les valeurs mesurées par ce capteur $C_i$. Le noeud attribue donc pour cette bande de fréquence $BF_{N,j}$ la valeur de CCEM par défaut.

Dans le cas contraire, on considère qu'il est possible de déduire une valeur *ccem* ($N_j$, $BF_{N,j}$) pour le noeud $N_{k0}$ à partir de l'ensemble des valeurs ($E_{i,q}$, $B_{i,q}$) des capteurs $C_i$ appartenant à l'ensemble G et suffisamment proches du noeud $N_{k0}$. La prise en compte de ces valeurs peut en outre être pondérée par les distances $d_i < d_0$ séparant ces capteurs $C_i$ du noeud $N_{k0}$.

La valeur *ccem* ($N_j$, $BF_{N,j}$) peut être estimée selon des procédés connus de l'homme du métier.

Par exemple, pour chaque bande de fréquence $BF_{N,j}$ pour laquelle il existe des relevés de valeur ($E_{i,q}$, $B_{i,q}$), une distance $D_j$, correspondant à la longueur d'onde de la plus petite fréquence de la bande de fréquence $BF_{N,j}$ est estimée. Par exemple, dans la bande de fréquences $BF_{N,j}$ = [2400 MHz ; 2483,5 MHz], $D_j = T_0 \cdot \dfrac{c}{2,4.10^9}$ avec $T_0$ = 1 s et $c = 3.10^8$ m/s, soit $D_j$ = 12,5 cm.

Pour chaque capteur dont les mesures sont prises en compte pour évaluer la valeur du champ électrique dans le voisinage du noeud $N_{k0}$, on cherche à estimer l'intensité du champ électrique $E_{i,j,max}$ à la distance $D_j$, en supposant que le champ $E_{i,q}$ mesuré par le capteur $C_i$ dans la bande de fréquence $BF_{N,j}$ soit exclusivement produit par une source d'émission radioélectrique située aux coordonnées du noeud $N_{k0}$. Si $D_j \geq d_i$, on estime $E_{i,j,max} = \dfrac{D_j}{d_i} \cdot E_{i,q}$

Dans le cas contraire, il est considéré que les distances sont trop petites par rapport à la précision attendue, et la valeur de $E_{i,j,max}$ est fixée arbitrairement à

$$E_{i,j,max} = \min(E_{i,q}, \frac{\sqrt{30.P_0}}{D_j}),$$

avec $P_0$ la puissance maximale apparente rayonnée par une antenne isotrope située aux coordonnées du noeud $N_{k0}$, dans la bande de fréquence $BF_{N,j}$.

Lorsque pour la distance $D_j$ l'ensemble des $E_{i,j,max}$ a été estimé, on choisit la valeur la plus élevée des $E_{i,j,max}$ en tant que valeur $E_j$.

On peut prévoir que le composant 69 retourne simplement le couple ($E_j$, 0). En effet, il peut être estimé qu'une estimation de $E_j$ est suffisante et qu'il n'est pas nécessaire ou utile d'estimer $B_j$. L'estimation ultérieure de la métrique *ccem* ($N_j$, $BF_{N,j}$) effectuée dans des moyens d'estimation 72 est alors réalisée avec les seules valeurs d'intensité de champ électriques estimées aux distances $D_j$, suivant le procédé illustré par la figure 3.

Le noeud $N_{k0}$ comporte un composant de routage multi-saut 71, du même type que le composant 5 sur la figure 2.

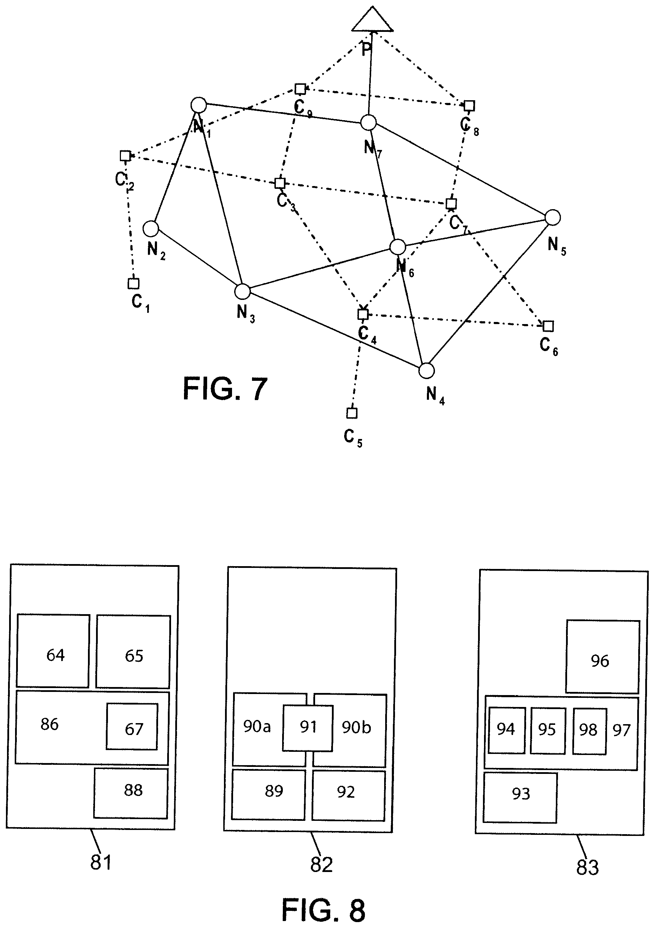

Les figures 7 et 8 se rapportent à un troisième mode de réalisation mettant en oeuvre un exemple de réseau de capteurs $C_1$,..., $C_9$, un exemple de réseau multi-sauts comportant des noeud $N_1$,..., $N_7$, et un exemple de dispositif de passerelle P assurant l'interconnexion entre ces deux réseaux. Sont représentés sur la figure 8 un capteur 81, un noeud 83 et un dispositif de passerelle 82 ou P.

Le capteur 81 peut être du même type que le capteur $C_{i0}$ décrit en référence à la figure 6, à ceci prés que les capteurs sont agencés pour communiquer avec la passerelle P. Les paquets émis par les capteurs $C_1$,..., $C_9$ transitent ainsi par la passerelle P avant d'être diffusés dans le réseau des noeuds $N_1$,..., $N_7$. Le capteur 81 peut ainsi comporter un composant de routage 86 agencé pour diffuser vers la passerelle 82 des structures définies par un composant 67 sensiblement similaire au composant 67 de la figure 6. Le capteur 81 peut comporter une interface de communication 88 identique, ou différente, à une interface de communication 93 des noeuds.

Le noeud 83 comporte des moyens de localisation 96 pour estimer sa propre position, un composant de routage multi-sauts 97 et l'interface de communication 93.

Le composant de routage multi-sauts 97 comprend un composant 94 agencé pour récupérer sélectivement des informations diffusées en provenance des capteurs.

Le composant de routage multi-sauts 97 comprend des moyens 98 d'obtention d'une valeur de champ électrique et/ou magnétique au voisinage du noeud 83. Ces moyens 98 sont reliés au composant 94 et peuvent être agencés de la même façon que les moyens 69 de la figure 6.

De manière optionnelle, on peut en outre prévoir un composant de diffusion de localisations des noeuds 95, permettant à la passerelle 82 de ne diffuser une structure S en provenance d'un capteur qu'à un ou plusieurs noeuds estimés suffisamment proches de ce capteur.

La passerelle 82 comporte un composant de collecte 90a pour collecter les messages de contrôle en provenance des capteurs, et un composant de diffusion 90b pour diffuser ces messages de contrôle dans le réseau des noeuds.

De manière optionnelle, on peut en outre prévoir un composant 91 apte à exploiter les informations de localisation des structures $S_i$ en provenance des capteurs. En effet, le comportement par défaut du composant 90b, consiste à diffuser les structures $S_i$ par inondation du réseau des noeuds. Lorsque le composant 95 optionnel des noeuds est également mis en oeuvre, la passerelle 82 peut avoir connaissance des positions des noeuds $N_1$, $N_2$, ..., $N_7$. Le composant 91 peut apporter une extension de routage géographique permettant à la passerelle 82 de diffuser une structure $S_i$ en direction seulement du ou des noeuds à proximité des coordonnées du capteur $C_i$ indiqué dans la structure $S_i$. L'activation de ces composants 91, 95 permet donc de viser un gain en termes de coûts de signalisation sur le réseau des noeuds.

Bien entendu, la passerelle 82 intègre une interface de communication avec le réseau de capteurs 89, et une interface de communication avec le réseau de noeuds 92.

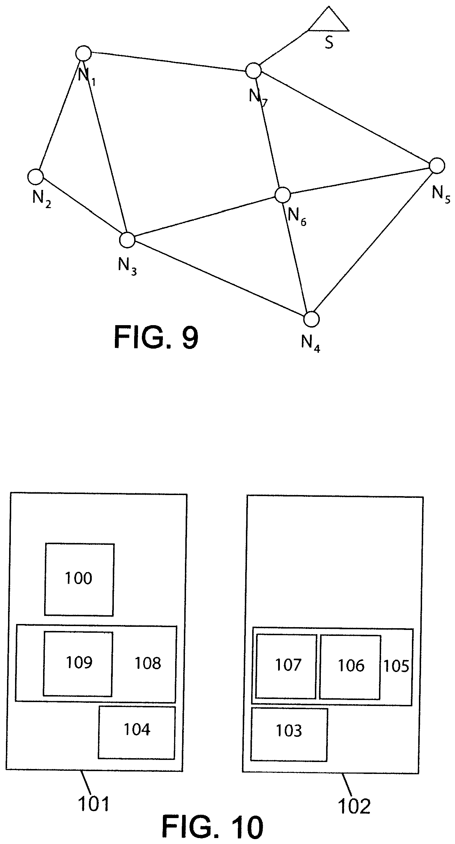

Les figures 9 et 10 se rapportent à un quatrième mode de réalisation, dans lequel la valeur de champ électromagnétique est prédite à partir de paramètres contextuels. Un noeud S du réseau multi-sauts héberge un serveur applicatif d'estimation de perturbations électromagnétiques. Le réseau de la figure 9 est donc un réseau sans capteur de champ électromagnétique.

Ce serveur, représenté sous la référence 101 sur la figure 10, comporte des moyens de prédiction 100, pour planifier au cours du temps une assignation de valeurs de métriques de prise en compte du champ électromagnétique environnant CCEM à un sous-ensemble SE de l'ensemble des noeuds du réseau de noeuds. En particulier, ce serveur 101 permet de générer, à divers instants t planifiés par un utilisateur de la fonction applicative, pour chaque noeud N du sous-ensemble *SE* :

$$U_N(t) = \{(BF_{N,1},\ c_t(N,\ BF_{N,1})),\ (BF_{N,2},\ c_t(N,\ BF_{N,2})),\ \ldots,\ (BF_{N,r},\ c_t(N,\ BF_{N,r}))\},$$

$c_t(N,\ BF_{N,j})$, j variant de 1 à r, représentant une valeur prédite de métrique CCEM destinée au noeud N, sur la bande de fréquence $BF_{N,j}$.

Les moyens de prédiction effectuent des prévisions de champ électromagnétique, en se basant par exemple sur des mesures effectuées par la passé, sur des informations de faits attendus, par exemple l'extinction des ordinateurs d'un immeuble de bureaux la nuit, ou bien encore sur des informations transmises par un autre dispositif. Par exemple, le nombre d'ordinateurs encore allumés peut être fourni par un serveur de l'immeuble de bureaux.

Ces moyens de prédiction 100 peuvent être agencés pour effectuer cette planification de diverses manières. Par exemple, des règles peuvent être définies préalablement à l'installation, ou lors de l'installation du composant 100 sur le lieu de déploiement du réseau, par un fournisseur (par exemple un constructeur ou un opérateur) ou bien encore par un prestataire (par exemple un électricien agréé par le fournisseur).

Selon un autre exemple, les règles peuvent être directement définies par l'utilisateur final du réseau, par exemple un particulier s'il s'agit d'un réseau domestique, ou un responsable informatique ou électrique s'il s'agit d'un réseau hospitalier, au moyen d'une interface homme/machine appropriée. Il peut s'agir par exemple d'une interface graphique directement accessible sur le composant 100 si ce dernier est déployé sur un terminal possédant un écran. Il peut également s'agir d'une interface Web permettant à l'utilisateur final d'accéder au composant 100 à distance, à partir d'un terminal approprié et possédant les droits d'accès à cette interface.

On peut aussi prévoir que les règles de planification soient télétransmises, en particulier à des fins de mise à jour.

Ces règles peuvent être automatiquement mises à jour par un système externe, pouvant être un système domotique, existant sur le lieu de déploiement du réseau. Par exemple, si le système domotique met en route à une heure donnée un plancher chauffant électrique dans une zone couverte par le réseau, les règles du composant 100 pourraient avantageusement être mises à jour par le système domotique, de manière à prendre en compte les perturbations électromagnétiques générées par le dispositif radioélectrique nouvellement démarré.

Le serveur 101 comporte un composant de routage 108 comportant des moyens de génération de messages 109 agencé pour insérer les structures $U_N(t)$ dans des messages de contrôle à destination du noeud N.

Le serveur 101 comporte en outre une interface de communication 104 pour envoyer et recevoir des données vers les noeuds. Le noeud 102, par exemple un terminal mobile, comprend le composant de routage 105, agencé pour prendre en compte une métrique dite métrique de prise en compte du champ électromagnétique environnant CCEM.

Cette métrique est prédite par les moyens 100 du serveur 101.

Le composant de routage 105 comporte des moyens 107 de reconnaissance des messages de contrôle en provenance du serveur 101. Les moyens de reconnaissance 107 sont agencés pour extraire les structures $U_N(t)$ des messages de contrôle reçus, et les transmettre à des moyens 106 de prise en compte de métriques $c_t$. Le noeud 102 possède en outre une interface de communication 103 pour échanger des données avec les autres noeuds du réseau, en en particulier le noeud S.

## Revendications

1. Procédé de routage dans un réseau multi-sauts, comprenant pour au moins un noeud ($N_1$,..., $N_7$) du réseau multi-sauts, les étapes suivantes:

   a/ obtention d'une valeur d'intensité d'un champ électromagnétique ($E_t$, $B_t$) dans un voisinage dudit noeud sur une bande de fréquences comprenant des premières fréquences de fonctionnement du réseau multi-sauts et des deuxièmes fréquences différant des fréquences de fonctionnement du réseau multi-sauts,
   b/ détermination (302) d'un rapport entre ladite valeur obtenue et une valeur d'intensité seuil de champ électromagnétique ($E_M$, $B_M$) prédéfinie,
   c/ sélection dudit noeud en tant que noeud d'acheminement d'au moins un message dans le réseau multi-saut lorsque le rapport déterminé indique que la valeur de l'intensité du champ électromagnétique ($E_t$, $B_t$) dans le voisinage dudit noeud est inférieure à la valeur d'intensité seuil de champ électromagnétique ($E_M$, $B_M$) prédéfinie.

2. Procédé selon la revendication 1, comprenant lors de l'étape a/, une mesure du champ électromagnétique dans le voisinage dudit noeud ($N_1$,..., $N_7$).

3. Procédé selon la revendication 1, comprenant lors de l'étape a/,

   recevoir, pour au moins un capteur distant ($C_1$,..., $C_9$), une mesure de champ électromagnétique dans le voisinage dudit capteur,
   et dans lequel
   la valeur d'intensité du champ électromagnétique dans le voisinage dudit noeud ($N_1$,..., $N_7$) est évaluée à partir des dites au moins une mesures reçues.

4. Procédé selon la revendication 3, dans lequel pour au moins un capteur distant ($C_1$,..., $C_9$), la mesure de champ électromagnétique dans le voisinage dudit capteur est reçue directement dudit capteur.

5. Procédé selon la revendication 3, dans lequel pour au moins un capteur distant ($C_1$,..., $C_9$), la mesure de champ électromagnétique dans le voisinage dudit capteur est reçue d'un dispositif de passerelle.

6. Procédé selon la revendication 3, dans lequel, lors de l'étape a/,

   on reçoit une pluralité de mesures de champ électromagnétique dans le voisinage d'une pluralité de capteurs respectifs,
   on sélectionne parmi ladite pluralité de mesures reçue des mesures correspondant à des capteurs situés à une distance maximale prédéterminée du noeud ($N_1$,..., $N_7$), et
   la valeur d'intensité dU champ électromagnétique dans le voisinage dudit noeud est obtenue à partir des mesures sélectionnées.

7. Procédé selon la revendication 1, dans lequel, à l'étape a/,

la valeur d'intensité dU champ électromagnétique dans le voisinage dudit noeud est prédite à partir d'au moins un paramètre contextuel.

8. Procédé selon la revendication 1, dans lequel on estime une valeur de métrique ($c_t$) à partir de

la valeur d'intensité dU champ électromagnétique ($E_t$, $B_t$) obtenue à l'étape a/,
une valeur d'intensité dU champ électromagnétique ($E_{t-1}$, $B_{t-1}$) précédemment obtenue, et
une valeur seuil d'intensité Du de champ électromagnétique ($E_M$, $B_M$) prédéfinie,

et dans lequel
lors de l'étape c/, on utilise ladite valeur de métrique pour sélectionner ou non ledit noeud en tant que noeud d'acheminement d'au moins un message dans le réseau multi-saut.

9. Procédé selon la revendication 8, dans lequel la valeur de métrique ($c_t$) est estimée suivant

$$c_t = \frac{1}{\alpha \cdot M_t + (1-\alpha) \cdot M_{t-1}},$$

avec $c_t$ la valeur de métrique, $0 < \alpha \leq 1$,

$$M_t = \max\left(\frac{E_t}{E_M}, \frac{B_t}{B_M}\right), \text{ et } M_{t-1} = \max\left(\frac{E_{t-1}}{E_M}, \frac{B_{t-1}}{B_M}\right)$$

où $E_M$ et $B_M$ sont des valeurs prédéterminées,
$E_t$ est une valeur d'intensité du champ électrique obtenue à l'étape a/ ,
et $E_{t-1}$ est une valeur d'intensité du champ électrique précédemment obtenue,
$B_t$ est une valeur d'intensité du champ magnétique obtenue à l'étape a/, et
et $B_{t-1}$ est une valeur d'intensité du champ magnétique précédemment obtenue.

10. Procédé selon la revendication 8, dans lequel

pour chaque route candidate d'un jeu d'au moins une route candidate, on détermine un paramètre de route à partir des valeurs de métrique des noeuds de ladite route candidate, et
on compare les paramètres de route ainsi déterminés pour choisir une route parmi les routes candidate,
**caractérisé en ce que**
pour chaque route candidate, le paramètre de route est déterminé en utilisant une loi de composition des valeurs de métrique concave.

11. Programme d'ordinateur comportant des instructions pour la mise en oeuvre du procédé selon la revendication 1, lorsque lesdites instructions sont exécutées par un processeur.

12. Système de routage pour un réseau multi-sauts comprenant une pluralité de noeuds, ledit système comprenant

des moyens d'obtention (4) d'une valeur d'intensité d'un champ électromagnétique dans un voisinage d'un noeud sur une bande de fréquences comprenant des premières fréquences de fonctionnement du réseau multi-sauts et des deuxièmes fréquences différant des fréquences de fonctionnement du réseau multi-sauts,
des moyens de détermination (6) d'un rapport entre ladite valeur obtenue et une valeur d'intensité seuil de champ électromagnétique ($E_M$, $B_M$) prédéfinie,
des moyens de choix de route (5) agencés pour utiliser le rapport déterminé pour sélectionner ledit noeud en tant que noeud d'acheminement d'au moins un message dans le réseau multi-sauts lorsque le rapport déterminé indique que la valeur de l'intensité du champ électromagnétique ($E_t$, $B_t$) dans le voisinage dudit noeud est inférieure à la valeur d'intensité seuil de champ électromagnétique ($E_M$, $B_M$) prédéfinie.

13. Noeud ($N_{i0}$) pour un réseau multi-sauts comprenant une pluralité de noeuds ($N_1$,...,$N_7$), ledit noeud comprenant

des moyens d'obtention (69) d'une valeur d'intensité d'un champ électromagnétique dans un voisinage dudit noeud sur une bande de fréquences comprenant des premières fréquences de fonctionnement du réseau multi-sauts et des deuxièmes fréquences différant des fréquences de fonctionnement du réseau multi-sauts, et des moyens de détermination d'un rapport entre ladite valeur obtenue et une valeur d'intensité seuil de champ électromagnétique ($E_M$, $B_M$) prédéfinie,

des moyens de choix de route (71) agencés pour utiliser le rapport déterminé pour s'auto-sélectionner en tant que noeud d'acheminement d'au moins un message dans le réseau multi-sauts lorsque le rapport déterminé indique que la valeur de l'intensité du champ électromagnétique ($E_t$, $B_t$) dans le voisinage dudit noeud est inférieure à la valeur d'intensité seuil de champ électromagnétique ($E_M$, $B_M$) prédéfinie.

**14.** Terminal de communication formant noeud ($N_{i0}$) d'un réseau multi-sauts selon la revendication 13.

**15.** Support d'enregistrement lisible par un ordinateur sur lequel est enregistré un programme d'ordinateur selon la revendication 11.

**Patentansprüche**

**1.** Verfahren zur Lenkung in einem Multi-Hop-Netz, das für mindestens einen Knoten ($N_1$, ..., $N_7$) des Multi-Hop-Netzes die folgenden Schritte umfasst:

a/ Erhalten eines Intensitätswerts eines elektromagnetischen Feldes ($E_t$, $B_t$) in einer Umgebung des Knotens auf einem Frequenzband mit ersten Betriebsfrequenzen des Multi-Hop-Netzes und zweiten Frequenzen, die sich von den Betriebsfrequenzen des Multi-Hop-Netzes unterscheiden,

b/ Bestimmen (302) eines Verhältnisses zwischen dem erhaltenen Wert und einem im Voraus definierten Intensitätsschwellenwert des elektromagnetischen Feldes ($E_M$, $B_M$),

c/ Auswählen des Kotens als Leitknoten mindestens einer Nachricht in dem Multi-Hop-Netz, wenn das bestimmte Verhältnis angibt, dass der Wert der Intensität des elektromagnetischen Feldes ($E_t$, $B_t$) in der Umgebung des Knotens geringer ist als der im Voraus definierte Intensitätsschwellenwert des elektromagnetischen Feldes ($E_M$, $B_M$).

**2.** Verfahren nach Anspruch 1 mit in Schritt a/ einer Messung des elektromagnetischen Feldes in der Umgebung des Knotens ($N_1$, ..., $N_7$).

**3.** Verfahren nach Anspruch 1, das in Schritt a/ Folgendes umfasst:

Empfangen für mindestens einen entfernten Sensor ($C_1$, ..., $C_9$) einer Messung des elektromagnetischen Feldes in der Umgebung des Sensors,
und wobei
der Intensitätswert des elektromagnetischen Feldes in der Umgebung des Knotens ($N_1$, ..., $N_7$) anhand der mindestens einen empfangenen Messung bewertet wird.

**4.** Verfahren nach Anspruch 3, wobei für mindestens einen entfernten Sensor ($C_1$, ..., $C_9$) die Messung des elektromagnetischen Feldes in der Umgebung des Sensors direkt vom Sensor empfangen wird.

**5.** Verfahren nach Anspruch 3, wobei für mindestens einen entfernten Sensor ($C_1$, ..., $C_9$) die Messung des elektromagnetischen Feldes in der Umgebung des Sensors von einer Gateway-Vorrichtung empfangen wird.

**6.** Verfahren nach Anspruch 3, wobei in Schritt a/
mehrere Messungen des elektromagnetischen Feldes in der Umgebung von mehreren jeweiligen Sensoren empfangen werden,
unter den mehreren empfangenen Messungen Messungen ausgewählt werden, die Sensoren entsprechen, die in einem vorbestimmten maximalen Abstand vom Knoten ($N_1$, ..., $N_7$) liegen, und
der Intensitätswert des elektromagnetischen Feldes in der Umgebung des Knotens aus den ausgewählten Messungen erhalten wird.

**7.** Verfahren nach Anspruch 1, wobei in Schritt a/
der Intensitätswert des elektromagnetischen Feldes in der Umgebung des Knotens aus mindestens einem Kontextparameter vorhergesagt wird.

8. Verfahren nach Anspruch 1, wobei ein Metrikwert ($c_t$) abgeschätzt wird aus
dem Intensitätswert des elektromagnetischen Feldes ($E_t$, $B_t$), der in Schritt a/ erhalten wird,
einem vorher erhaltenen Intensitätswert des elektromagnetischen Feldes ($E_{t-1}$, $B_{t-1}$), und
einem im Voraus definierten Intensitätsschwellenwert des elektromagnetischen Feldes ($E_M$, $B_M$),
und wobei
in Schritt c/ der Metrikwert verwendet wird, um den Knoten als Leitknoten mindestens einer Nachricht im Multi-Hop-Netz auszuwählen oder nicht.

9. Verfahren nach Anspruch 8, wobei der Metrikwert ($c_t$) abgeschätzt wird gemäß

$$c_t = \frac{1}{\alpha \cdot M_t + (1-\alpha) \cdot M_{t-1}},$$

wobei $c_t$ der Metrikwert ist,

$$0 < \alpha \leq 1,$$

$$M_t = \max\left(\frac{E_t}{E_M}, \frac{B_t}{B_M}\right) \quad \text{und} \quad M_{t-1} = \max\left(\frac{E_{t-1}}{E_M}, \frac{B_{t-1}}{B_M}\right)$$

wobei $E_M$ und $B_M$ vorbestimmte Werte sind,
$E_t$ ein Intensitätswert des elektrischen Feldes ist, der in Schritt a/ erhalten wird,
und $E_{t-1}$ ein vorher erhaltener Intensitätswert des elektrischen Feldes ist,
$B_t$ ein Intensitätswert des Magnetfeldes ist, der in Schritt a/ erhalten wird, und
und $B_{t-1}$ ein vorher erhaltener Intensitätswert des Magnetfeldes ist.

10. Verfahren nach Anspruch 8, wobei
für jeden Kandidatenweg eines Satzes von mindestens einem Kandidatenweg ein Wegparameter aus den Metrikwerten der Knoten des Kandidatenweges bestimmt wird, und
die so bestimmten Wegparameter verglichen werden, um einen Weg unter den Kandidatenwegen auszuwählen,
**dadurch gekennzeichnet, dass**
für jeden Kandidatenweg der Wegparameter unter Verwendung eines Gesetzes einer konkaven Verknüpfung der Metrikwerte bestimmt wird.

11. Computerprogramm, das Befehle für die Ausführung des Verfahrens nach Anspruch 1, wenn die Befehle durch einen Prozessor ausgeführt werden, umfasst.

12. Verfahren zur Lenkung für ein Multi-Hop-Netz mit mehreren Knoten,
wobei das System umfasst
Mittel (4) zum Erhalten eines Intensitätswerts eines elektromagnetischen Feldes in einer Umgebung eines Knotens auf einem Frequenzband mit ersten Betriebsfrequenzen des Multi-Hop-Netzes und zweiten Frequenzen, die sich von den Betriebsfrequenzen des Multi-Hop-Netzes unterscheiden,
Mittel (6) zum Bestimmen eines Verhältnisses zwischen dem erhaltenen Wert und einem im Voraus definierten Intensitätsschwellenwert des elektromagnetischen Feldes ($E_M$, $B_M$),
Mittel (5) zur Wahl des Weges, die angeordnet sind, um das bestimmte Verhältnis zu verwenden, um den Knoten als Leitknoten mindestens einer Nachricht in dem Multi-Hop-Netz auszuwählen, wenn das bestimmte Verhältnis angibt, dass der Wert der Intensität des elektromagnetischen Feldes ($E_t$, $B_t$) in der Umgebung des Knotens geringer ist als der im Voraus definierte Intensitätsschwellenwert des elektromagnetischen Feldes ($E_M$, $B_M$).

13. Knoten ($N_{i0}$) für ein Multi-Hop-Netz mit mehreren Knoten ($N_1$, ..., $N_7$),
wobei der Knoten Folgendes umfasst:

Mittel (69) zum Erhalten eines Intensitätswerts eines elektromagnetischen Feldes in einer Umgebung des Knotens auf einem Frequenzband mit ersten Betriebsfrequenzen des Multi-Hop-Netzes und zweiten Frequenzen, die sich von den Betriebsfrequenzen des Multi-Hop-Netzes unterscheiden, und

Mittel zum Bestimmen eines Verhältnisses zwischen dem erhaltenen Wert und einem im Voraus definierten Intensitätsschwellenwert des elektromagnetischen Feldes ($E_M$, $B_M$),

Mittel (71) zum Wählen eines Weges, die angeordnet sind, um das bestimmte Verhältnis zu verwenden, um sich automatisch als Leitknoten mindestens einer Nachricht im Multi-Hop-Netz auszuwählen, wenn das bestimmte Verhältnis angibt, dass der Wert der Intensität des elektromagnetischen Feldes ($E_t$, $B_t$) in der Umgebung des Knotens geringer ist als der im Voraus definierte Intensitätsschwellenwert des elektromagnetischen Feldes ($E_M$, $B_M$).

14. Kommunikationsendgerät, das einen Knoten ($N_{i0}$) eines Multi-Hop-Netzes nach Anspruch 13 bildet.

15. Computerlesbares Aufzeichnungsmedium, auf das ein Computerprogramm nach Anspruch 11 aufgezeichnet ist.

## Claims

1. Method for routing in a multi-hop network, comprising, for at least one node ($N_1$,..., $N_7$) of the multi-hop network, the following steps:

   a/ acquiring a value of intensity of an electromagnetic field ($E_t$, $B_t$) within a vicinity of said node over a frequency band comprising first operating frequencies of the multi-hop network and second frequencies differing from the operating frequencies of the multi-hop network,

   b/ determining (302) a ratio between said acquired value and a predefined electromagnetic field ($E_M$, $B_M$) threshold value of intensity,

   c/ selecting said node as a node for routing at least one message in the multi-hop network when the determined ratio indicates that the value of the intensity of the electromagnetic field ($E_t$, $B_t$) within the vicinity of said node is lower than the predefined electromagnetic field ($E_M$, $B_M$) threshold value of intensity.

2. Method according to Claim 1, comprising, during step a/, measuring the electromagnetic field within the vicinity of said node ($N_1$,..., $N_7$).

3. Method according to Claim 1, comprising, during step a/,

   receiving, for at least one remote sensor ($C_1$,..., $C_9$), a measurement of the electromagnetic field within the vicinity of said sensor,

   and wherein

   the value of intensity of the electromagnetic field within the vicinity of said node ($N_1$,..., $N_7$) is evaluated on the basis of said at least one received measurement(s).

4. Method according to Claim 3, wherein, for at least one remote sensor ($C_1$,..., $C_9$), the measurement of the electromagnetic field within the vicinity of said sensor is received directly from said sensor.

5. Method according to Claim 3, wherein, for at least one remote sensor ($C_1$,..., $C_9$), the measurement of the electromagnetic field within the vicinity of said sensor is received from a gateway device.

6. Method according to Claim 3, wherein, during step a/,

   a plurality of measurements of the electromagnetic field within the vicinity of a plurality of respective sensors are received,

   a selection is made, from said received plurality of measurements, for the measurements corresponding to sensors situated at a predetermined maximum distance from the node ($N_1$,..., $N_7$), and

   the value of intensity of the electromagnetic field within the vicinity of said node is acquired on the basis of the selected measurements.

7. Method according to Claim 1, wherein, in step a/,

   the value of intensity of the electromagnetic field within the vicinity of said node is predicted on the basis of at least one contextual parameter.

8. Method according to Claim 1, wherein a metric value ($c_t$) is estimated on the basis of

the value of intensity, acquired in step a/, of the electromagnetic field ($E_t$, $B_t$),
a value of intensity, acquired previously, of the electromagnetic field ($E_{t-1}$, $B_{t-1}$), and
a predefined electromagnetic field ($E_M$, $B_M$) threshold value of intensity,
and wherein,
during step c/, said metric value is used to select or not to select said node as a node for routing at least one
message in the multi-hop network.

9. Method according to Claim 8, wherein the metric value ($c_t$) is estimated as follows:

$$c_t = \frac{1}{\alpha \cdot M_t + (1-\alpha) \cdot M_{t-1}},$$

where $c_t$ is the metric value,

$$0 < \alpha \leq 1,$$

$$M_t = \max\left(\frac{E_t}{E_M}, \frac{B_t}{B_M}\right), \text{ and } M_{t-1} = \max\left(\frac{E_{t-1}}{E_M}, \frac{B_{t-1}}{B_M}\right)$$

where $E_M$ and $B_M$ are predetermined values,
$E_t$ is a value of intensity, acquired in step a/, of the electrical field,
and $E_{t-1}$ is a value of intensity, acquired previously, of the electrical field,
$B_t$ is a value of intensity, acquired in step a/, of the magnetic field,
and $B_{t-1}$ is a value of intensity, acquired previously, of the magnetic field.

10. Method according to Claim 8, wherein,

for each candidate route of a set of at least one candidate route, a route parameter is determined on the basis
of the metric values of the nodes of said candidate route, and
the route parameters thus determined are compared in order to choose a route from the candidate routes,
**characterized in that**,
for each candidate route, the route parameter is determined using a concave metric value composition law.

11. Computer program including instructions for implementing the method according to Claim 1 when said instructions
are executed by a processor.

12. Routing system for a multi-hop network comprising a plurality of nodes,
said system comprising

means (4) for acquiring a value of intensity of an electromagnetic field within a vicinity of a node over a frequency
band comprising first operating frequencies of the multi-hop network and second frequencies differing from the
operating frequencies of the multi-hop network,
means (6) for determining a ratio between said acquired value and a predefined electromagnetic field ($E_M$, $B_M$)
threshold value of intensity,
route selection means (5) designed to use the determined ratio to select said node as a node for routing at least
one message in the multi-hop network when the determined ratio indicates that the value of the intensity of the
electromagnetic field ($E_t$, $B_t$) within the vicinity of said node is lower than the predefined electromagnetic field
($E_M$, $B_M$) threshold value of intensity.

**13.** Node ($N_{i0}$) for a multi-hop network comprising a plurality of nodes ($N_1$,..., $N_7$),
said node comprising
means (69) for acquiring a value of intensity of an electromagnetic field within a vicinity of said node over a frequency band comprising first operating frequencies of the multi-hop network and second frequencies differing from the operating frequencies of the multi-hop network, and
means for determining a ratio between said acquired value and a predefined electromagnetic field ($E_M$, $B_M$) threshold value of intensity,
route selection means (71) designed to use the determined ratio to automatically select itself as a node for routing at least one message in the multi-hop network when the determined ratio indicates that the value of the intensity of the electromagnetic field ($E_t$, $B_t$) within the vicinity of said node is lower than the predefined electromagnetic field ($E_M$, $B_M$) threshold value of intensity.

**14.** Communication terminal forming a node ($N_{i0}$) of a multi-hop network according to Claim 13.

**15.** Computer-readable recording medium on which a computer program according to Claim 11 is recorded.

FIG. 1

FIG. 2

$$rcpt\ E_t,\ B_t \quad \text{—301}$$

$$M_t = \max\left(\frac{E_t}{E_M}, \frac{B_t}{B_M}\right) \quad \text{—302}$$

$$c_t = \frac{1}{\alpha.M_t + (1-\alpha).M_{t-1}} \quad \text{—303}$$

## FIG. 3

FIG. 4A

FIG. 4B

FIG. 4C

$(2,5,1,\{(N_2,2) ; (N_1,3) ; (N_7,2)\})$

$(2,5,1,\{(N_2,2) ; (N_1,3) ; (N_7,2)\})$

$(2,5,1,\{ (N_2,2) ; (N_3,1,5) ; (N_4,2)\})$

$(2,5,1,\{ (N_2,2) ; (N_3,1,5) ; (N_4,2)\})$

## FIG. 4D

$(5,2,1,\{ (N_5,2); (N_7,2) ; (N_1,3) ; (N_2,2)\})$

$(5,2,1,\{ (N_5,2); (N_4,2) ; (N_3,1,5) ; (N_2,2)\})$

## FIG. 4E

FIG. 5

FIG. 6

**FIG. 7**

**FIG. 8**

FIG. 9

FIG. 10

**EP 2 308 259 B1**